# EUROPEAN PATENT APPLICATION

(11) **EP 4 553 601 A1**
(43) Date of publication of application: **14.05.2025**
(21) Application number: 24205773.5
(22) Date of filing: 10.10.2024
(51) Int. Cl.: G05D 1/485, B64C 11/00, B64C 13/50

(54) **COLLECTIVE CONTROL USING VERTICAL VELOCITY**

(30) Priority: 07.11.2023 US 202318503534
(71) Applicant: Lockheed Martin Corporation, Bethesda, Maryland 20817 (US)
(72) Inventor: Geiger, Derek H., Wilton, CT 06897 (US); Kinkead, William M., Wallingford, CT 06492 (US)
(74) Representative: Schmitt-Nilson Schraud Waibel Wohlfrom Patentanwälte Partnerschaft mbB

(57) **Abstract**

Collective control using vertical velocity is provided. A system can include a data processing system comprising one or more processors, coupled with memory. The data processing system can receive, from a sensor, a velocity of an aerial vehicle along a vertical axis of a body of the aerial vehicle. The data processing system can generate a command for collective control of a pitch of blades of a rotor of the aerial vehicle based on a comparison of the velocity with a reference. The data processing system can control, via an actuator, the pitch of the blades of the rotor in accordance with the command.

## Description

An aerial vehicle, such as a rotorcraft, can include a rotor and blades that generate lift for the aerial vehicle. However, due to the configuration of a rotor and blades generating lift, it can be challenging to control such an aerial vehicle under certain circumstances or in certain aerial maneuvers.

Technical solutions disclosed herein can provide improved control of a rotorcraft operating under high speed flight or maneuvering flight. For example, the technology can include a vertical speed controller on collective that is configured to hold a zero or near zero feet per minute or feet per second reference when certain conditions are satisfied. For example, the conditions can include a trim state which can be established as a pitch attitude within a predetermined window, a pitch inceptor in detent, and a disengaged collective trim release. In some cases, the technology can utilize a pitch leveler to facilitate leveling out the rotorcraft. During trimmed flight, this technology can utilize a pitch beeper to re-reference the trim pitch attitude. During maneuvering flight, this technology can manage or control a body axis acceleration via the collective to allow for improved build-up of lift force or increased maneuverability. Thus, during trimmed flight, this technology can maintain a zero climb rate, thereby improving the control of the rotorcraft, improving the maneuverability of the rotor craft, and reducing excessive inputs from a user interface or user input device.

At least one aspect of the present disclosure is directed to a system. The system can include a data processing system including one or more processors, coupled with memory. The data processing system can receive, from a sensor, a velocity of an aerial vehicle along a vertical axis of a body of the aerial vehicle. The data processing system can generate a command for collective control of a pitch of blades of a rotor of the aerial vehicle based on a comparison of the velocity with a reference. The data processing system can control, via an actuator, the pitch of the blades of the rotor in accordance with the command.

The data processing system can collectively control the pitch of the blades of the rotor in accordance with the command to maintain a constant angle between a trajectory of the aerial vehicle and a longitudinal axis of the body of the aerial vehicle.

The data processing system can compare the velocity to the reference to determine an error between the velocity and the reference. The data processing system can generate the command using the error.

The reference can be zero. The control of the pitch of the blades of the rotor in accordance with the command can cause the velocity of the aerial vehicle along the vertical axis of the body of the aerial vehicle to approach zero.

The vertical axis of the body of the aerial vehicle can be perpendicular with a longitudinal axis of the body of the aerial vehicle.

The data processing system can receive a velocity of the aerial vehicle along a longitudinal axis of the body of the aerial vehicle. The data processing system can determine that the velocity is greater than a threshold. The data processing system can collectively control the pitch of the blades of the rotor in accordance with the command responsive to a determination that the velocity is greater than the threshold.

The system can include an inertial measurement unit to measure an acceleration along the vertical axis of the body of the aerial vehicle. The data processing system can be coupled with the inertial measurement unit. The data processing system can receive data from the inertial measurement unit indicating the acceleration along the vertical axis of the body of the aerial vehicle. The data processing system can determine the velocity from the acceleration. The data processing system can generate the command for collective control of the pitch of the blades of the rotor of the aerial vehicle based on the velocity determined from the acceleration measured by the inertial measurement unit.

The data processing system can receive data from a pitch sensor, the data indicating a pitch attitude of the aerial vehicle. The data processing system can compare the pitch attitude to a range of pitch attitudes to determine that the pitch attitude is within the range of pitch attitudes. The data processing system can collectively control the pitch of the blades of the rotor in accordance with the command responsive to a determination that the pitch attitude is within the range of pitch attitudes.

The data processing system can determine a back drive to move an input device proportionally to a change in the pitch of the blades of the rotor indicated by the command, the input device to implement collective control of the pitch of blades of the rotor. The data processing system can operate an actuator of the input device to move the input device using the back drive.

The data processing system can determine a position of an input device, the input device to implement collective control to change the pitch of the blades of the rotor. The data processing system can determine that a user has not provided an input to the input device based on the position. The data processing system can collectively control the pitch of the blades of the rotor responsive to the determination that the user has not provided the input.

At least one aspect of the present disclosure is directed to a method. The method can include receiving, by a data processing system comprising one or more processors, coupled with memory from a sensor, a velocity of an aerial vehicle along a vertical axis of a body of the aerial vehicle. The method can include generating, by the data processing system, a command for collective control of a pitch of blades of a rotor of the aerial vehicle based on a comparison of the velocity with a reference. The method can include controlling, by the data processing system, an actuator to change the pitch of the blades of the rotor in accordance with the command.

The method can include collectively controlling, by the data processing system, the pitch of the blades of the rotor in accordance with the command to maintain a constant angle between a trajectory of the aerial vehicle and a longitudinal axis of the body of the aerial vehicle.

The method can include comparing, by the data processing system, the velocity to the reference to determine an error between the velocity and the reference. The method can include generating, by the data processing system, the command using the error.

The reference can be zero. The control of the pitch of the blades of the rotor in accordance with the command cam cause the velocity of the aerial vehicle along the vertical axis of the body of the aerial vehicle to approach zero.

The vertical axis of the body of the aerial vehicle can be perpendicular with a longitudinal axis of the body of the aerial vehicle.

The method can include receiving, by the data processing system, a velocity of the aerial vehicle along a longitudinal axis of the body of the aerial vehicle. The method can include determining, by the data processing system, that the velocity is greater than a threshold. The method can include collectively controlling, by the data processing system, the pitch of the blades of the rotor in accordance with the command responsive to a determination that the velocity is greater than the threshold.

The method can include receiving, by the data processing system, data from a pitch sensor, the data indicating a pitch attitude of the aerial vehicle. The method can include comparing, by the data processing system, the pitch attitude to a range of pitch attitudes to determine that the pitch attitude is within the range of pitch attitudes. The method can include collectively controlling, by the data processing system, the pitch of the blades of the rotor responsive to a determination that the pitch attitude is within the range of pitch attitudes.

The method can include determining, by the data processing system, a position of an input device, the input device to implement collective control to change the pitch of the blades of the rotor. The method can include determining, by the data processing system, that a user has not provided an input to the input device based on the position. The method can include collectively controlling, by the data processing system, the pitch of the blades of the rotor responsive to the determination that the user has not provided the input.

At least one aspect of the present disclosure is directed to a rotorcraft. The rotorcraft can include processing circuitry. The processing circuitry can receive, from a sensor, a velocity of the rotorcraft along a vertical axis of a body of the rotorcraft. The processing circuitry can generate a command for collective control of a pitch of blades of a rotor of the rotorcraft based on a comparison of the velocity with a reference. The processing circuitry can control, via an actuator, the pitch of the blades of the rotor in accordance with the command.

The processing circuitry can collectively control the pitch of the blades of the rotor in accordance with the command to maintain a constant angle between a trajectory of the rotorcraft and a longitudinal axis of the body of the rotorcraft.

These and other aspects and implementations are discussed in detail below. The foregoing information and the following detailed description include illustrative examples of various aspects and implementations, and provide an overview or framework for understanding the nature and character of the claimed aspects and implementations. The drawings provide illustration and a further understanding of the various aspects and implementations, and are incorporated in and constitute a part of this specification. The foregoing information and the following detailed description and drawings include illustrative examples and should not be considered as limiting.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing. In the drawings:
FIG. 1 is an example aerial vehicle including a data processing system that implements collective control using vertical velocity.
FIG. 2 is an example aerial vehicle maneuvering where a data processing system implements collective control using vertical velocity.
FIG. 3 is an example data processing system of an aerial vehicle that implements collective control using vertical velocity.
FIG. 4 is an example method of implementing collective control using vertical velocity.
FIG. 5 is an example computing architecture of a data processing system.

Following below are more detailed descriptions of various concepts related to, and implementations of, methods, apparatuses, and systems of collective control using vertical velocity. The various concepts introduced above and discussed in greater detail below may be implemented in any of numerous ways.

An aerial vehicle, such as a helicopter or rotorcraft, can fly along a longitudinal axis of a body of the aerial vehicle. The rotorcraft can include a propeller, engine, or thruster that generates thrust along the longitudinal axis. At high speeds (e.g., speeds greater than or equal to 90-100 knots forward speed), the rotorcraft can exhibit fixed wing like flight characteristics. At high speeds, a rotor of the rotorcraft can primarily generate lift. In order to implement trim control for the rotorcraft when it exhibits fixed-wing like flight characteristics, a data processing system of the rotorcraft can use an a-prior map. The map can define collective control commands for the blades of the rotorcraft. The collective control can adjust the pitch angle of the blades simultaneously, together, or collectively. The collective control can adjust the pitch angles of the blades in equal amounts or substantially equal amounts (e.g., +/- 1%, 2%, 3% or less). The map can be pre-defined and generated based on a physics based simulation of the behavior of the rotorcraft at high speeds.

The a-priori map can output a collective control command for a particular set of inputs, e.g., angle of attack, atmospheric conditions (e.g., humidity, pressure, weather), or air speed. However, because the a-priori map is defined before the rotorcraft flies, is manufactured, or is deployed, the a-priori map may introduce error in the flight control of the rotorcraft. For example, because the a-priori map can be defined based on simulations, the a-priori map may not be able to account for degradation or wear of components of the rotorcraft over time or in real-world scenarios. This can introduce errors when the rotorcraft is attempting to fly in a trimmed flight state, e.g., a state where vertical acceleration or velocity is zero or all forces are balanced. Therefore, the pilot may need to manually adjust the pitch attitude of the aerial vehicle to achieve a trimmed state.

Furthermore, when the rotorcraft is maneuvering (e.g., in terrain flight, in nap of earth (NOP) flight, when the rotorcraft climbing, the rotorcraft is transitioning from trimmed flight to climbing flight), the a-priori map can introduce slow responses to flight decisions. For example, because the a-priori map may not balance forces to ensure that velocity along the vertical axis of the rotorcraft is constant or zero, the a-priori map can cause a reduction in load factor (e.g., lift to weight ratio), causing the rotorcraft to be slow to respond to pitch changes requested by a pilot.

To solve for these, and other technical issues, this technical solution can include collective control using vertical velocity. The technical solution can include a body axis vertical velocity controller, or an angle of attack controller. For example, the data processing system can generate collective commands to control the pitch angle of the blades of the rotor craft to maintain a constant velocity along a vertical axis of a body of the rotorcraft. The rotorcraft can include a sensor that measures, detects, or senses acceleration or velocity along the vertical axis of the rotorcraft. The data processing system can receive the measurements of the sensor and adjust, change, or tune the pitch of the blades of the rotorcraft to cause the velocity of the rotorcraft along the vertical axis to approach, near, or move towards a particular value. For example, the data processing system can control the pitch angle of the blades of the rotorcraft with the velocity to cause the rotorcraft to have no vertical velocity (e.g., a vertical velocity of zero) or a vertical velocity that is equal to a non-zero rate.

By dynamically adjusting collective control of the rotor craft with the velocity along the vertical axis of the rotor craft, the data processing system can implement trimmed flight that accounts for changes, wear, or degradation of components of the rotorcraft. In this regard, the trimmed flight of the rotorcraft can reduce vertical velocity which can decrease the aerodynamic characteristics of the rotorcraft. Therefore, this trimmed flight control can result in greater efficiency, such as causing the rotorcraft to consume less fuel or energy, and allowing the rotorcraft to travel greater distances without re-fueling or recharging, or with less frequent re-fueling or recharging. Furthermore, in trimmed flight, the collective control using the vertical velocity can ensure that the aerial vehicle has a zero climb rate, thus reducing the need for the pilot to identify a trimmed pitch attitude or collective command to identify an optimal trim point.

Furthermore, during dynamic flight, the collective control of the rotorcraft with the vertical velocity can allow for quick response to flight decisions, e.g., pilot requested changes to the pitch of the rotorcraft. This flight control can result in greater maneuverability of the aircraft, allowing the rotorcraft to change directions or change elevation faster. This can provide enhanced maneuverability with body-rate feedback. For example, during maneuvering or dynamic flight, the body axis accelerations or velocities can be managed via the collective to allow for quicker build-up of load factor to increase maneuverability.

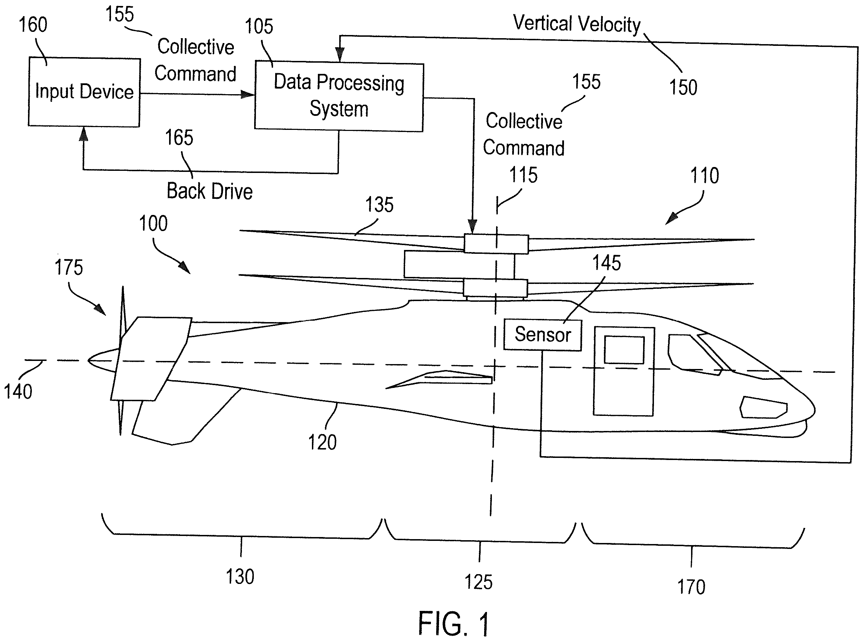

Referring now to FIG. 1, among others, an example aerial vehicle 100 including a data processing system 105 that implements collective control using vertical velocity is shown. In FIG. 1, the aerial vehicle 100 can be in trimmed flight, e.g., traveling along a horizontal path without significant maneuvering. The aerial vehicle 100 can be a vertical lift aerial vehicle, a rotorcraft, a rotary-wing aircraft, a helicopter, an autogyros, a gyrodyne, a tiltrotor aircraft, or a fixed-wing aircraft including a rotor. The aerial vehicle 100 can include a rotor 110. The rotor 110 can produce vertical lift or thrust. The rotor 110 can include one or multiple rotors, e.g., one rotor stacked along an axis 115 with another rotor. The rotor 110 can include at least one blade. The blades can rotate, spin, move, or turn about the axis 115. The data processing system 105 can implement collective control of the blades of the aerial vehicle 100. For example, the collective control can include simultaneously, concurrently, or collectively changing the pitch angles of the blades of the rotor 110. The collective control can change the pitch of a blade 135 about an axis that spans a length of the blade 135. The collective control can increase or decrease the pitch angles of the blades of the rotor 110. The collective control can increase or decrease the pitch angles of the blades of the rotor 110 in equal amounts. The collective control can cause the pitch angles of the blades of the rotor 110 to be equal or substantially equal (e.g., +/- 1%, 2%, 3% or less).

The aerial vehicle 100 can include a body 120. The body 120 can be or include a fuselage. The body 120 can have an airfoil shape, a cylindrical shape, a tubular shape. The body 120 can be at least partially hollow to carry equipment, motors, engines, controls, cargo, personnel, pilots, or passengers. The body 120 can include the front portion 170. The front portion 170 can carry a pilot, a co-pilot, a cockpit, flight controls, weapons systems, etc.

The body 120 can include a middle portion 125. The middle portion 125 can couple with or include the rotor 110. The middle portion 125 can couple with the rotor 110 on an upper side of the aerial vehicle 100. The middle portion 125 can carry an engine, a motor, or another actuator that can cause the rotor 110 to rotate. The actuator can cause the rotor 110 to rotate about a longitudinal axis, which may be the same axis as the vertical axis 115 of the body 120 of the aerial vehicle 100. The vertical axis 115 can be defined based on a longitudinal axis of the rotor 110 of the aerial vehicle 100. The actuator can cause the blades 135 of the aerial vehicle 100 to change angle. The actuator can cause the blades 135 to change pitch. The actuator can collective, simultaneously, or concurrently adjust the pitch angles of the blades 135 of the aerial vehicle 100 such that the pitch angles of each blade 135 is substantially the same or changed substantially in the same amounts.

The body 120 can include a rear portion 130, such as a tail. The tail 130 can include stabilizers or rudders. The tail 130 can include a propeller 175. At least one engine, motor, or actuator can cause the propeller 175 to spin, move, or actuate to generate forward motion. The propeller 175 can spin, turn, or move about a longitudinal axis 140. The longitudinal axis 140 can be a longitudinal axis of a body 120 of the aerial vehicle 100. The longitudinal axis 140 of the body 120 can be the same longitudinal axis that the propeller 175 spins about.

The aerial vehicle 100 can include at least one sensor 145. The sensor 145 can be an inertial measurement unit (IMU), an accelerometer, or another type of velocity or acceleration sensor. The sensor 145 can sense, detect, or measure velocity, speed, or acceleration. The sensor 145 can sense velocity, speed, or acceleration along a body axis 115 of the aerial vehicle 100. The sensor 145 can provide data indicating velocity, speed, or acceleration of the aerial vehicle 100. The sensor 145 can provide data indicating velocity or acceleration of the aircraft along the vertical axis 115. The axis 115 can be a vertical axis of the body 120 of the aerial vehicle 100, such as a body axis. The axis 115 can be an axis perpendicular with the longitudinal axis 140 of the aerial vehicle 100. The vertical axis 115 can be a longitudinal axis of the rotor 110. The sensor 145 can generate data, a data packet, a message, a voltage, or a current that indicates the vertical velocity 150. The sensor 145 can send, transmit, provide, or communicate the vertical velocity 150 to the data processing system 105. The data processing system 105 can receive, accept, or read the vertical velocity 150 from the sensor 145. The longitudinal axis 140 can be a longitudinal axis of a fuselage of the vehicle 100. The vertical axis 115 can be a vertical axis of a fuselage of the vehicle 100.

The sensor 145 can be installed, positioned, or disposed such that a measurement axis of the sensor 145 is aligned with or parallel with the vertical axis 115. For example, the sensor 145 can be disposed with an orientation in the body 120 of the aerial vehicle 100 such that a measurement axis along which the sensor 145 measures accelerations or velocities is parallel with the vertical axis 115 of the aerial vehicle 100.

The sensor 145 can be communicably coupled, electrically coupled, or otherwise connected to the data processing system 105. The sensor 145 can be coupled via at least one cable, communication bus, wire or set of wires, or other electronic communication medium. The sensor 145 can communicate via a protocol, such as Aeronautical Radio Incorporated (ARINC), ARINC-429, controller area network (CAN), RS-485, or another communication protocol. The sensor 145 can transmit, sensor, or provide data packets, data values, measurements, or data frames. The data provided by the sensor 145 can directly or indirectly indicate vertical velocity 150 or vertical acceleration. For example, the data provided by the sensor 145 can include measurements of acceleration along the vertical axis 115. The data processing system 105 can integrate the acceleration signal received from the sensor 145 to determine a vertical velocity signal 150. The resulting vertical velocity signal 150 can be used by the data processing system 105 to determine the collective command 155.

The aerial vehicle 100 can include at least one data processing system 105. The data processing system 105 can be, include, or be part of a flight control system, an avionics system, or another computer or processing system of the aerial vehicle 100. The data processing system 105 can generate a command 155 for collective control of the aerial vehicle 100. The data processing system 105 can generate the command 155 using or based on the vertical velocity 150. The command 155 can be a collective control command to adjust the pitch of the blades 135 of the aerial vehicle 100. The command 155 can be a collective command, e.g., an adjustment or pitch value to change each of the blades 135 to.

The data processing system 105 can generate or determine the command 155 based on a comparison of the vertical velocity 150 with a constant. The data processing system 105 can store or retrieve a value. The value can be a predefined value or a constant. The value can be programmed by a programmer, designer, or manufacturer of the aerial vehicle 100. The value can be provided by an operator, owner, pilot, or co-pilot of the aerial vehicle 100, e.g., provided via at least one input device. The value can be computed, determined, or generated from an input angle of attack. An angle of attack can be input or specified by a user via an input device, and the data processing system 105 can generate the reference value to maintain the specified angle of attack.

The data processing system 105 can determine the collective command 155 to maintain a vertical velocity 150 equal to the constant. The data processing system 105 can generate the collective command 155 to change the vertical velocity 150, decrease the vertical velocity 150, or increase the vertical velocity. The data processing system 105 can generate a collective command 155 that controls the rotor 110 such that the vertical velocity 150 approaches the constant, moves towards the constant, becomes equal to the constant. For example, the data processing system 105 can compare the vertical velocity 150 with a reference constant, such as zero, a non-zero number, a positive number, or a negative number. The data processing system can compare the vertical velocity 150 with the reference constant to determine an error. The error can be a difference between the vertical velocity 150 and the reference constant. The data processing system 105 can generate the collective command 155 based on the error. The collective command 155 can change the pitch of the blades 135 based on a magnitude of the error. For example, the greater the error, the greater the change in the pitch angle of the blades 135.

For example, the constant can be or be set to zero to indicate that vertical velocity 150 along the vertical axis 115 should be driven down to zero. The data processing system 105 can compare the vertical velocity 150 to zero, and determine an error of the vertical velocity 150 responsive to a determination that the vertical velocity 150 is not equal to zero, or is not within a threshold amount from zero. The data processing system 105 can use the error to generate a collective command 155 that, when used to control the rotor 110, causes the vertical velocity 150 to change towards, move towards, or approach zero.

The data processing system 105 can detect whether the aerial vehicle 100 is in a trimmed state or a maneuvering state. In a trimmed state, the constant can be a first value while in the maneuvering state, the constant can be a second value. For example, in the trimmed state, the constant can be zero. In the maneuvering state, the constant can be a non-zero number. The data processing system 105 can implement trim control by acting as a vertical speed controller via the collective command 155 responsive to detecting that the aerial vehicle 100 is in a trimmed state. When trimmed conditions are met, the constant the data processing system 105 can generate the collective command 155 to cause the vertical velocity 150 to approach zero feet per second. The trimmed conditions can be a pitch attitude of the aerial vehicle 100 that is within a window or set of values. For example, the trimmed conditions can include a pitch inceptor 160 being in a detent (e.g., the pilot or co-pilot is providing no collective command 155). The trimmed conditions can include a collective trim release not being engaged.

The data processing system 105 can control the rotor 110 in accordance with or using the collective command 155. The data processing system 105 can collective change the pitch angles of the blades 135 based on the collective command 155. The data processing system 105 can control the pitch angles of the blades 135 of the rotor 110 using the collective command 155. The data processing system 105 can use an actuator, such as a motor, engine, solenoid, servo, or other actuator to increase or decrease the pitch of the blades 135 by an amount indicated by the collective command 155. For example, a motor, engine, gear system, linkage system, or other actuator can adjust control arms that pitch the blades 135 forward or backwards. The collective command 155 can be a servo command to control a servo that collectively adjusts the pitch of the blades 135 of the aerial vehicle 100.

The aerial vehicle 100 can include at least one input device 160. The input device 160 can be an input stick, a yoke, a keyboard, a joystick, or a lever. The input device 160 can generate the collective command 155. The collective command 155 received via the input device 160 can override the collective command 155 generated by the data processing system 105 based on the vertical velocity 150. The input device 160 can generate a digital or analog signal proportional to or indicating a pitch angle for the collective command 155. The data processing system 105 can generate the collective command 155 for trimmed flight responsive to detecting that a user has not provided input via the input device 160.

The data processing system 105 can generate back drive 165. The back drive 165 can be a data packet, a signal, a control decision, or an adjustment to the position of the input device 160. The input device 160 can include at least one actuator that can move the position of the input device 160. For example, an actuator of the input device 160 can move a lever forwards or backwards, move a joystick, etc. The data processing system 105 can generate a back drive 165 proportional to or corresponding with the collective command 155 generated by the data processing system 105. The data processing system 105 can control the input device 160 via the actuator with the back drive 165 such that the position of the input device 160 corresponds with the collective command 155 that the data processing system 105 generates to control the rotor 110.

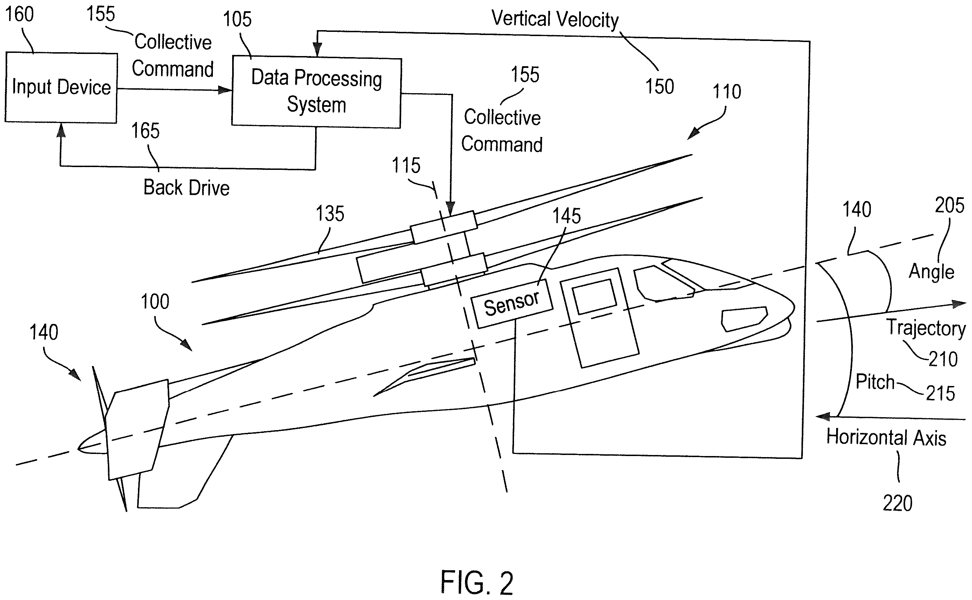

Referring now to FIG. 2, among others, the aerial vehicle 100 maneuvering is shown where a data processing system 105 implements collective control using vertical velocity. In FIG. 2, the aerial vehicle can be in maneuvering flight, e.g., where the aerial vehicle changes altitude or direction. During maneuvering flight, the pitch attitude of the aerial vehicle 100 can be outside the window of pitch angles used to define trimmed flight. During maneuvering flight, the data processing system 105 can generate the collective command 155 based on a constant to regulate the vertical velocity 150 along the vertical axis 115 to be, move to, or approach the non constant.

The aerial vehicle 100 can have a trajectory 210. The trajectory 210 can be a direction in which the aerial vehicle 100 flies, moves, or maneuvers. An angle 205 formed between the trajectory 210 and the longitudinal axis 140 of the aerial vehicle 100 can be an angle of attack. The data processing system 105, by generating the collective command 155 to cause the vertical velocity 150 to approach the constant, can keep or hold the angle 205 constant. The data processing system 105 can maintain a constant angle 205. In some implementations, the data processing system 105 can generate, compute, or determine a constant value that maintains a particular angle 205. For example, a user can provide an angle value via an input device, and the data processing system 105 can determine and execute on a constant that causes the angle 205 to approach, move to, or be the provided angle value. The collective command 155 can cause the pitch angle of the blades 135 to be collectively changed such that the angle 205 approaches, moves, to, or becomes a predefined value.

A pitch attitude or angle 215 can be formed between the longitudinal axis 140 and a horizontal axis 220. The horizontal axis 220 can be an axis defined relative to the horizon. The pitch angle 215 can be sensed, detected, or measured by a sensor and provided to the data processing system 105. The data processing system 105 can compare the pitch angle 215 to a range of pitches or pitch attitudes or to upper and lower bounds of a pitch range. If the pitch angle 215 is within the pitch range, the data processing system 105 can generate the collective command 155 or operate the rotor 110 based on the collective command 155. The data processing system 105 can generate the collective command 155 to cause the vertical velocity 150 to approach a constant when the pitch angle 215 is within the range. The data processing system can determine that the pitch angle 215 is outside the pitch range. For example, the data processing system 105 can determine that the pitch angle 215 is greater than an upper bound of the pitch range or less than a lower bound of the pitch range. Responsive to determining that the pitch 215 is outside the range, the data processing system 105 can determine the collective command 155 based on a comparison of the vertical velocity 150 to a constant. The data processing system 105 can operate the rotor 110 based on the collective command 155.

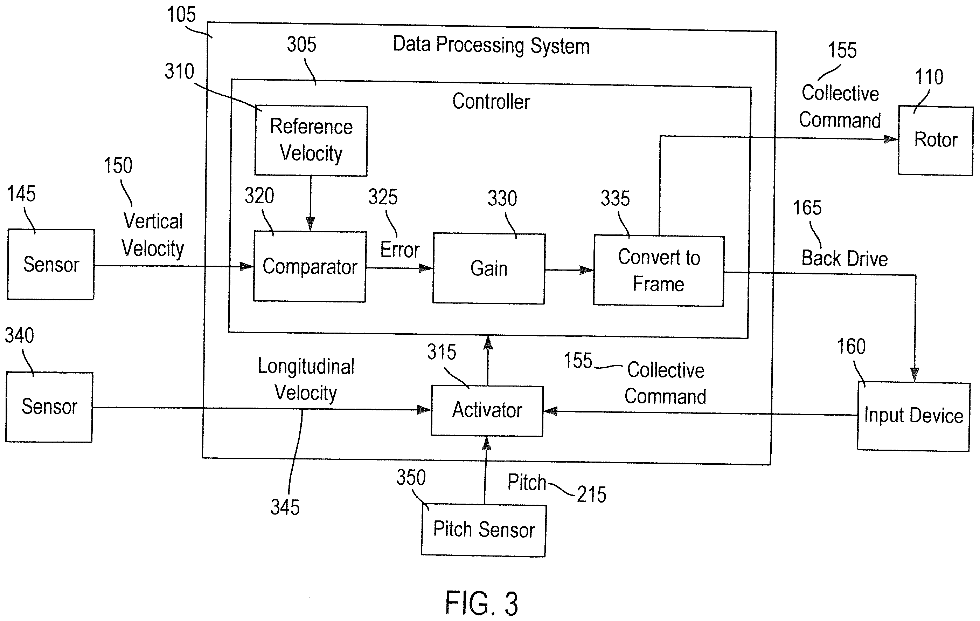

Referring now to FIG. 3, among others, the data processing system 105 of the aerial vehicle 100 that implements collective control using vertical velocity is shown. The data processing system 105 can include at least one controller 305. The controller 305 can be a vertical body axis controller or an angle of attack controller. The controller 305 can generate collective commands 155 at a rate or frequency, e.g., greater than or less than 100 hertz (Hz), 90-110 Hz, or 80-120 Hz. The controller 305 can receive the vertical velocity 150 and generate the collective command 155 based on the vertical velocity 150. The controller 305 can implement one or more control laws. The controller 305 can be a feedback controller. The controller 305 can implement a control algorithm, such as proportional integral derivative (PID) control. The controller 305 can include at least one reference velocity 310. The reference velocity 310 can be a constant or dynamic value. The reference velocity 310 can be zero. The reference velocity 310 can be a non-zero number. The reference velocity 310 can be a value indicating a rate of movement along the vertical axis 115 in feet per second or meters per second.

The controller 305 can change or adjust the reference velocity 310 based on the flight state of the aerial vehicle 100. For example, when the aerial vehicle 100 is in a trimmed flight state, an activator 315 can cause the controller to update the reference velocity 310. The reference velocity 310 can be zero for a trimmed flight state. The reference velocity 310 can be a non-zero number for a maneuvering state. The activator 315 can detect the state of the aerial vehicle 100 and cause the controller 305 to update the reference velocity 310 responsive to detecting the reference velocity 310.

The controller 305 can include at least one comparator 320. The comparator 320 can compare the vertical velocity 150 with the reference velocity 310. The comparator 320 can generate at least one error 325. The comparator 320 can subtract the reference velocity 310 from the vertical velocity 150 to generate the error 325. The comparator 320 can subtract the vertical velocity 150 from the reference velocity 310 to generate the error 325. The error 325 can be a difference or deviation between the vertical velocity 150 and the reference velocity 310. The controller 305 can apply a gain 330 to the error 325. The controller 305 can multiply the error 325 with the gain 330. The resulting error 325 with the applied gain can be converted to a rotor frame or an input device frame. The controller 305 can use the error 325 to determine, generate, or compute the collective command 155 or the back drive 165.

For example, a module 335 can convert the error 325 to a frame of reference for operating the rotor 110. For example, the module 335 can convert the error 325 to a frame of reference for representing the collective command 155 on the input device 160. The module 335 can convert the error 325 to a collective command 155 that reduces or minimizes the error 325. The controller 305 can provide the collective command 155 to the rotor 110. The controller 305 can cause the rotor 110 to operate based on the collective command 155 to achieve a pitch of the blades 135 indicated by the collective command 155. The controller 305 can apply filtering to the collective command 155. For example, the controller 305 can implement filtering, such as a Kalman filter or an extended Kalman filter.

The module 335 can implement a maximum or minimum threshold on the collective command 155. For example, the module 335 can prevent a collective pitch from exceeding a maximum threshold. The module 335 can prevent a collective pitch from being less than a minimum threshold. If the collective pitch exceeds the maximum threshold, the module 335 can set the collective pitch equal to the maximum threshold. If the collective pitch falls below the minimum threshold, the module 335 can set the collective pitch equal to the minimum threshold.

The module 335 can generate a back drive 165 that is proportional to the collective command 155. The controller 305 can provide the back drive 165 to the input device 160. The back drive 165 can be a command, request, or signal to move the input device 160 proportionally to a change in the pitch angles of the blades 135 indicated by the collective command 155. The input device 160 can include an input device, such as a stick, yoke, or joystick that can move via an input from a pilot or via an actuator, such as a motor. The controller 305 can control the input device 160 by causing the motor to move the stick, yoke, or joystick based on the back drive 165. The back drive 165 can cause the stick, yoke, or joystick to move a distance proportional to the pitch angle indicated by the collective command 155 for the blades 135.

The data processing system 105 can include at least one activator 315. The activator 315 can cause the controller 305 to start or stop, activate or deactivate, turn on or off, or control the rotor 110 with the collective command 155 or not control the rotor 110 with the collective command 155. The activator 315 can determine that one or more conditions or states are satisfied, and activate the controller 305 responsive to a detection that the condition is satisfied. The activator 315 can deactivate the controller 305 responsive to a determination that the condition is not satisfied.

For example, the activator 315 can receive a velocity 345 from a velocity sensor 340. The velocity 345 can be a velocity of the aerial vehicle 100 along the longitudinal axis 140 of the aerial vehicle 100. The velocity 345 can be an airspeed of the aerial vehicle 100. The velocity 345 can be a velocity along the trajectory 210 of the aerial vehicle 100. In some implementations, the sensor 340 is an accelerometer that produces an acceleration of the aerial vehicle 100 along the longitudinal axis 140. The activator 315 can integrate the acceleration to determine the longitudinal velocity 345. The activator 315 can compare the longitudinal velocity 345 to a threshold. The threshold can be 90-100 knots forward speed. The threshold can be 80-110 knots forward speed. The threshold can be less than 80 knots forward speed. The threshold can be greater than 110 knots forward speed.

The threshold can be a velocity where the aerial vehicle 100 exhibits or begins to exhibit fixed-wing like aerodynamic properties or characteristics. At velocities of the aerial vehicle 100 below the threshold, the aerial vehicle 100 may not exhibit fixed-wing aerodynamic properties, and therefore it may not be necessary to operate the collective control of the aerial vehicle based on the vertical velocity 150. Responsive to a detection that the longitudinal velocity 345 meets or exceeds the threshold, the activator 315 can cause the controller 305 to generate the collective command 155 or control the rotor 110 with the collective command 155. For example, responsive to a detection that the longitudinal velocity 345 meets or exceeds the threshold, the activator 315 can turn on or activate the controller 305. Furthermore, if the longitudinal velocity 345 falls below the threshold, the activator 315 can turn off, deactivate, disable, or disengage the controller 305. Responsive to a detection that the longitudinal velocity 345 is less than the threshold, the controller 305 may stop, case, or not generate the collective command 155 using the vertical velocity 150 or control the rotor 110 based on the collective command 155 generated using the vertical velocity 150. Furthermore, responsive to an aggressive maneuver, the controller 305 can deactivate the controller 305.

The activator 315 can receive data from a pitch sensor 350. The pitch sensor 350 can be a sensor that measures, detects, or senses the pitch angle 215 of the aerial vehicle 100. The pitch sensor 350 can be a gyroscope. The data received from the pitch sensor 350 can indicate the pitch angle 215 of the aerial vehicle 100. The data can be a data packet, a data frame, a data value, a set of data values, or a signal. The activator 315 can read the pitch angle 215 from the data or generate the pitch angle 215 from the data. The activator 315 can compare the pitch angle 215 to a range of pitch angles. For example, the activator 315 can compare the pitch angle 215 to a lower threshold or lower bound. The activator 315 can compare the pitch angle 215 to an upper threshold or upper bound.

Responsive to a determination that the pitch angle 215 is less than the upper bound and greater than the lower bound, the activator 315 can cause the controller 305 to generate the collective command 155 using the vertical velocity 150 or control the rotor 110 using the collective command 155 generated using the vertical velocity 150. Responsive to a determination that the pitch angle 215 is less than the lower bound or greater than the upper bound, the activator 315 can cause the controller 305 to stop generating the collective command 155 using the vertical velocity 150 or stop controlling the rotor 110 using the collective command 155. Responsive to a determination that the pitch angle 215 is less than the lower bound or greater than the upper bound, the activator 315 can cause the controller 305 to not generate the collective command 155 using the vertical velocity 150 or not control the rotor 110 using the collective command 155. The activator 315 can cause the reference velocity 310 to be a first value (e.g., zero) responsive to a detection that the pitch angle 215 is within the pitch range. The activator 315 can cause the reference velocity 310 to be a second value (e.g. a non-zero number) responsive to a detection that the pitch angle 215 is outside the pitch range.

The activator 315 can determine a position of the input device 160. For example, the position of the input device 160 can be a user input position for collective control to change the pitch of blades 135 of the rotor 110. If the position is within a range of positions, or is in a detent, the activator 315 can determine that the user is not providing any collective input. The activator 315 can activate or cause the controller 305 to generate the collective command 155 or control the rotor 110 based on the collective command 155 responsive to a determination that the user is not providing an input via the input device 160. Responsive to receive a user input via the input device 160, e.g., a change in pitch angle via the input device 160, the activator 315 can cause the controller 305 to stop generating the collective command 155 using the vertical velocity 150 or stop controlling the rotor 110 using the collective command 155 generated using the collective command 155.

The activator 315 can cause the controller 305 to regulate the vertical velocity 150 of the aerial vehicle 100 along the vertical axis 115 responsive to multiple conditions all being met. For example, the activator 315 can detect that the pitch angle 215 is within a range or tolerance around a reference pitch trim attitude and that the input device 160 is in detent and no collective commands 155 are provided via the input device 160. For example, responsive to detecting that both conditions are met, the activator 315 can cause the controller 305 to generate the collective command 155 based on the vertical velocity 150 and control the rotor 110 based on the collective command 155.

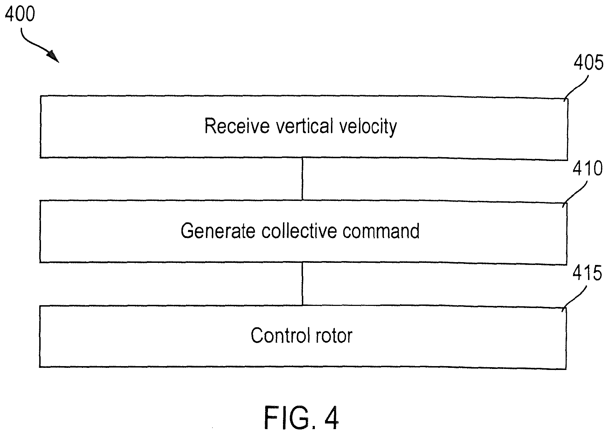

Referring now to FIG. 4, among others, an example method 400 of implementing collective control using vertical velocity is shown. The data processing system 105 can implement at least a portion of the method 400. The sensor 145 can implement at least a portion of the method 400. The rotor 110 can implement at least a portion of the method 400. The method 400 can include an ACT 405 of receiving a vertical velocity. The method 400 can include an ACT 410 of generating a collective command. The method 400 can include an ACT 415 of controlling a rotor.

At ACT 405, the method 400 can include receiving, by the data processing system 105, the vertical velocity 150. The data processing system 105 can receive a message, a data packet, a dataset, a data frame, a voltage, or a signal that indicates the vertical velocity 150. The data processing system 105 can read the vertical velocity 150 directly from the information received. The data processing system 105 can generate, compute, or determine the vertical velocity 150 from the information. For example, the data received from the sensor 145 can indicate an acceleration along the vertical axis 115. The data processing system 105 can integrate the acceleration to determine the vertical velocity 150. A measurement axis over which the sensor 145 measures acceleration or velocity can be aligned to be parallel with the vertical axis 115 or can coincide with the vertical axis 115. The method 400 can include installing the sensor 145 within or outside the aerial vehicle 100 such that the measurement axis of the sensor 145 is aligned or parallel with the vertical axis 115.

At ACT 410, the method 400 can include generating, by the data processing system 105, a collective command 155. The data processing system 105 can generate the collective command 155 from the vertical velocity 150, using the vertical velocity 150, or based on the vertical velocity 150. The data processing system 105 can generate a collective command 155 that indicates a pitch angle for the blades 135 of the rotor 110 that minimizes, reduces, or decreases an amount of error 325. The data processing system 105 can generate the error 325 based on a comparison of the vertical velocity 150 to a reference velocity 310. The collective command 155 can cause the vertical velocity 150 to approach, move to, or approximate the reference velocity 310.

At ACT 415, the method 400 can include controlling, by the data processing system 105, a rotor. The data processing system 105 can cause the rotor 110 to change the pitch of the blades 135 along an axis that spans the length of the blades 135. The rotor 110 can include a set of linkages, members, or assemblies that can collectively or simultaneously change the pitch angles of the blades 135 in substantially equal amounts. The data processing system 105 can generate a signal, control decision, switch command, or voltage, that causes the rotor 110 to change the pitch angles of the blades 135 based on the collective control 155.

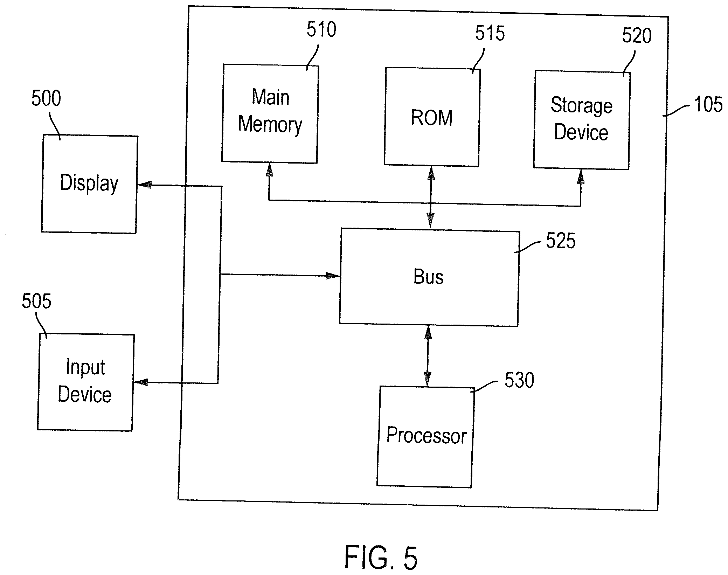

Referring now to FIG. 5, among others, an example block diagram of a data processing system 105 is shown. The data processing system 105 can include or be used to implement a data processing system or its components. The architecture described in FIG. 5 can be used to implement the computing or processing components of the aerial vehicle 100, the data processing system 105, the input device 160, the sensor 145, the sensor 340, the pitch sensor 350, or a controller of the rotor 110. The data processing system 105 can include at least one bus 525 or other communication component for communicating information and at least one processor 430 or processing circuit coupled to the bus 525 for processing information. The data processing system 105 can include one or more processors 530 or processing circuits coupled to the bus 525 for processing information. The data processing system 105 can include at least one main memory 510, such as a random access memory (RAM) or other dynamic storage device, coupled to the bus 525 for storing information, and instructions to be executed by the processor 530. The main memory 510 can be used for storing information during execution of instructions by the processor 530. The data processing system 105 can further include at least one read only memory (ROM) 515 or other static storage device coupled to the bus 525 for storing static information and instructions for the processor 530. A storage device 520, such as a solid state device, magnetic disk or optical disk, can be coupled to the bus 525 to persistently store information and instructions.

The data processing system 105 can be coupled via the bus 525 to a display 500, such as a liquid crystal display, or active matrix display. The display 500 can display information to a user. An input device 505, such as a keyboard or voice interface can be coupled to the bus 525 for communicating information and commands to the processor 530. The input device 505 can include a touch screen of the display 500. The input device 505 can include a cursor control, such as a mouse, a trackball, or cursor direction keys, for communicating direction information and command selections to the processor 430 and for controlling cursor movement on the display 500.

The processes, systems and methods described herein can be implemented by the data processing system 105 or a display of the data processing system 105 (e.g., a touchscreen) in response to the processor 530 executing an arrangement of instructions contained or included in main memory 510. Such instructions can be read into main memory 510 from another computer-readable medium, such as the storage device 520. Execution of the arrangement of instructions contained in main memory 510 causes the data processing system 105 to perform the illustrative processes described herein. One or more processors in a multi-processing arrangement can be employed to execute the instructions contained in main memory 510. Hard-wired circuitry can be used in place of or in combination with software instructions together with the systems and methods described herein. Systems and methods described herein are not limited to any specific combination of hardware circuitry and software.

Although an example computing system has been described in FIG. 5, the subject matter including the operations described in this specification can be implemented in other types of digital electronic circuitry, or in computer software, firmware, or hardware, including the structures disclosed in this specification and their structural equivalents, or in combinations of one or more of them.

Some of the description herein emphasizes the structural independence of the aspects of the system components or groupings of operations and responsibilities of these system components. Other groupings that execute similar overall operations are within the scope of the present application. Modules can be implemented in hardware or as computer instructions on a non-transient computer readable storage medium, and modules can be distributed across various hardware or computer based components.

The systems described above can provide multiple ones of any or each of those components and these components can be provided on either a standalone system or on multiple instantiations in a distributed system. In addition, the systems and methods described above can be provided as one or more computer-readable programs or executable instructions embodied on or in one or more articles of manufacture. The article of manufacture can be cloud storage, a hard disk, a CD-ROM, a flash memory card, a PROM, a RAM, a ROM, or a magnetic tape. In general, the computer-readable programs can be implemented in any programming language, such as LISP, PERL, C, C++, C#, PROLOG, Python, or in any byte code language such as JAVA. The software programs or executable instructions can be stored on or in one or more articles of manufacture as object code.

Example and non-limiting module implementation elements include sensors providing any value determined herein, sensors providing any value that is a precursor to a value determined herein, datalink or network hardware including communication chips, oscillating crystals, communication links, cables, twisted pair wiring, coaxial wiring, shielded wiring, transmitters, receivers, or transceivers, logic circuits, hard-wired logic circuits, reconfigurable logic circuits in a particular non-transient state configured according to the module specification, any actuator including at least an electrical, hydraulic, or pneumatic actuator, a solenoid, an opamp, analog control elements (springs, filters, integrators, adders, dividers, gain elements), or digital control elements.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices including cloud storage). The operations described in this specification can be implemented as operations performed by a data processing apparatus on data stored on one or more computer-readable storage devices or received from other sources.

The terms "computing device," "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. ACTs, elements and features discussed in connection with one implementation are not intended to be excluded from a similar role in other implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any ACT or element being based on any information, act or element may include implementations where the act or element is based at least in part on any information, act, or element.

Any implementation disclosed herein may be combined with any other implementation or example, and references to "an implementation," "some implementations," "one implementation" or the like are not necessarily mutually exclusive and are intended to indicate that a particular feature, structure, or characteristic described in connection with the implementation may be included in at least one implementation or example. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure.

## Claims

1. A system, comprising:
a data processing system comprising one or more processors, coupled with memory, configured to:
receive, from a sensor, a velocity of an aerial vehicle along a vertical axis of a body of the aerial vehicle;
generate a command for collective control of a pitch of blades of a rotor of the aerial vehicle based on a comparison of the velocity with a reference; and
control, via an actuator, the pitch of the blades of the rotor in accordance with the command.

2. The system of claim 1, comprising:
the data processing system configured to:
collectively control the pitch of the blades of the rotor in accordance with the command to maintain a constant angle between a trajectory of the aerial vehicle and a longitudinal axis of the body of the aerial vehicle.

3. The system of one of claims 1-2, comprising:
the data processing system configured to:
receive a velocity of the aerial vehicle along a longitudinal axis of the body of the aerial vehicle;
determine that the velocity is greater than a threshold; and
collectively control the pitch of the blades of the rotor in accordance with the command responsive to a determination that the velocity is greater than the threshold.

4. The system of one of claims 1-3, comprising:
an inertial measurement unit to measure an acceleration along the vertical axis of the body of the aerial vehicle; and
the data processing system coupled with the inertial measurement unit, the data processing system configured to:
receive data from the inertial measurement unit indicating the acceleration along the vertical axis of the body of the aerial vehicle;
determine the velocity from the acceleration; and
generate the command for collective control of the pitch of the blades of the rotor of the aerial vehicle based on the velocity determined from the acceleration measured by the inertial measurement unit.

5. The system of one of claims 1-4, comprising:
the data processing system configured to:
determine a back drive to move an input device proportionally to a change in the pitch of the blades of the rotor indicated by the command, the input device to implement collective control of the pitch of blades of the rotor; and
operate an actuator of the input device to move the input device using the back drive.

6. The system of one of claims 1-5, comprising:
the data processing system configured to:
determine a position of an input device, the input device to implement collective control to change the pitch of the blades of the rotor;
determine that a user has not provided an input to the input device based on the position; and
collectively control the pitch of the blades of the rotor responsive to the determination that the user has not provided the input.

7. A method, comprising:
receiving, by a data processing system comprising one or more processors, coupled with memory from a sensor, a velocity of an aerial vehicle along a vertical axis of a body of the aerial vehicle;
generating, by the data processing system, a command for collective control of a pitch of blades of a rotor of the aerial vehicle based on a comparison of the velocity with a reference; and
controlling, by the data processing system, an actuator to change the pitch of the blades of the rotor in accordance with the command.

8. The method of claim 7, comprising:
collectively controlling, by the data processing system, the pitch of the blades of the rotor in accordance with the command to maintain a constant angle between a trajectory of the aerial vehicle and a longitudinal axis of the body of the aerial vehicle.

9. The method of claim 7 or 8, comprising:
receiving, by the data processing system, a velocity of the aerial vehicle along a longitudinal axis of the body of the aerial vehicle;
determining, by the data processing system, that the velocity is greater than a threshold; and
collectively controlling, by the data processing system, the pitch of the blades of the rotor in accordance with the command responsive to a determination that the velocity is greater than the threshold.

10. The method of one of claims 7-9, comprising:
determining, by the data processing system, a position of an input device, the input device to implement collective control to change the pitch of the blades of the rotor;
determining, by the data processing system, that a user has not provided an input to the input device based on the position; and
collectively controlling, by the data processing system, the pitch of the blades of the rotor responsive to the determination that the user has not provided the input.

11. The system of one of claims 1-6, or method of one of claims 7-10, wherein
the data processing system is configured to:
compare the velocity to the reference to determine an error between the velocity and the reference; and
generate the command using the error.

12. The system of one of claims 1-6 and 11, or method of one of claims 7-11, wherein:
the reference is zero; and
the control of the pitch of the blades of the rotor in accordance with the command causes the velocity of the aerial vehicle along the vertical axis of the body of the aerial vehicle to approach zero.

13. The system of one of claims 1-6 and 11-12, or method of one of claims 7-12, wherein:
the vertical axis of the body of the aerial vehicle is perpendicular with a longitudinal axis of the body of the aerial vehicle.

14. The system of one of claims 1-6 and 11-13, or method of one of claims 7-13, wherein
the data processing system is configured to:
receive data from a pitch sensor, the data indicating a pitch attitude of the aerial vehicle;
compare the pitch attitude to a range of pitch attitudes to determine that the pitch attitude is within the range of pitch attitudes; and
collectively control the pitch of the blades of the rotor in accordance with the command responsive to a determination that the pitch attitude is within the range of pitch attitudes.

15. A rotorcraft, comprising a system according to one of claims 1-6 and 11-14, wherein the aerial vehicle is the rotorcraft.
